# EUROPEAN PATENT APPLICATION

(11) **EP 2 395 786 A1**
(43) Date of publication of application: **14.12.2011**
(21) Application number: 10738648.4
(22) Date of filing: 08.02.2010
(51) Int. Cl.: H04W 28/02, H04W 76/06

(54) **MOBILE COMMUNICATION METHOD, GATEWAY DEVICE, AND SERVER DEVICE**

(30) Priority: 09.02.2009 JP 2009027933
(71) Applicant: NTT DOCOMO, INC., Chiyoda-ku Tokyo 100-6150 (JP)
(72) Inventor: NISHIDA, Katsutoshi, Tokyo 100-6150 (JP); SUZUKI, Keisuke, Tokyo 100-6150 (JP); TANAKA, Itsuma, Tokyo 100-6150 (JP)
(74) Representative: HOFFMANN EITLE
(86) International application number: PCT/JP2010/051815
(87) International publication number: WO 2010/090320

(57) **Abstract**

A mobile communication method according to the present invention includes the steps of: (A) disconnecting a core network bearer when it is determined that a mobile station (UE) visits a radio access network of the W-CDMA scheme and communication is not performed via the core network bearer for a predetermined period; and (B) holding the core network bearer when it is determined that the mobile station (UE) visits a radio access network of the LTE scheme and communication is not performed via the core network bearer for the predetermined period.

## Description

### TECHNICAL FIELD

The present invention relates to a mobile communication method, a gateway apparatus and a server apparatus.

### BACKGROUND ART

In a mobile communication system defined in the 3GPP, when communication is not performed by a mobile station UE for a fixed period, a procedure for releasing a bearer (hereinafter, referred to as a "radio access network bearer") in a radio access network is defined from the standpoint of the effective utilization of a radio resource and the delay reduction of a reconnection.

Here, the procedure is called "Preservation control procedure", and the state of the mobile station UE, for which the radio access network bearer has been released by the preservation control procedure is called "Preservation state".

Further, according to the mobile communication system, when the state of the mobile station UE is transitioned to the preservation state by the preservation control procedure and then communication is not performed by the mobile station UE for a fixed period, a bearer (hereinafter, referred to as a "core network bearer") in a core network is configured to be released from the standpoint of effective utilization of a core network resource. Here, the procedure will be called "Preservation state releasing procedure".

Further, according to the above-mentioned mobile communication system, in a radio access network of the LTE (Long Term Evolution) scheme, it is necessary for the mobile station UE to hold at least one core network bearer in order to maintain an attach state.

Meanwhile, according to the above-mentioned mobile communication system, in a radio access network of the W-CDMA scheme, it is not necessary for the mobile station UE to hold the core network bearer in order to maintain the attach state.

### SUMARY OF THE INVENTION

### PROBLEMS TO BE SOLVED BY THE INVENTION

However, according to the above-mentioned mobile communication system, if the preservation state releasing procedure is performed regardless of the type of the radio access network, the following problems may occur.

For example, in the radio access network of the W-CDMA scheme, when the state of the mobile station UE is transitioned to the preservation state by the preservation control procedure and then communication is not performed by the mobile station USE for a fixed period, the core network bearer is released by the preservation state releasing procedure and the state of the mobile station UE is transitioned to the attach state.

Meanwhile, in the radio access network of the LTE scheme, when the state of the mobile station UE is transitioned to the preservation state by the preservation control procedure and then communication is not performed by the mobile station UE for a fixed period, the core network bearer is released by the preservation state releasing procedure. Here, if all core network bearers are released, the state of the mobile station UE is transitioned to a detach state.

Here, in the radio access network of the LTE scheme, after the state of the mobile station UE is transitioned to the detach state as described above, it is probable that the mobile station UE performs an attach process with respect to the radio access network of the LTE scheme again.

In such a case, when the state of the mobile station UE is transitioned to the preservation state again by the preservation control procedure and then communication is not performed by the mobile station UE for a fixed period, it is probable that the core network bearer is released by the preservation state releasing procedure and the state of the mobile station UE is transitioned to the detach state.

As a consequence, since the state of the mobile station UE is alternately repeated to the attach state and the detach state, resources of the radio access network and the core network may be wasted.

Therefore, the present invention is intended to overcome the above-described problems, and an object thereof is to provide a mobile communication method capable of preventing the waste of resources of the radio access network and the core network by determining whether to perform a preservation state releasing procedure according to the type of the radio access network, a gateway apparatus and a server apparatus.

### MEANS FOR SOLVING THE PROBLEM

A first aspect of the present invention is summarized as a mobile communication method, in which a mobile station communicates with a predetermined network via a first bearer that is a bearer in a radio access network and a second bearer that is a bearer in a core network, including the steps of: (A) disconnecting the second bearer when it is determined that the mobile station visits a first radio access network and communication is not performed via the second bearer for a predetermined period; and (B) holding the second bearer when it is determined that the mobile station visits a second radio access network and communication is not performed via the second bearer for the predetermined period.

A second aspect of the present invention is summarized as a mobile communication method, in which a mobile station communicates with a predetermined network via a first bearer that is a bearer in a radio access network and a second bearer that is a bearer in a core network, including the steps of: (A) disconnecting the second bearer when it is determined that the mobile station visits a first radio access network and communication is not performed via the second bearer for a predetermined period, or when it is determined that a plurality of the second bearers have been set to the mobile station in a second radio access network and communication is not performed via the second bearer for the predetermined period; and (B) holding the second bearer when it is determined that only one second bearer has been set to the mobile station in the second radio access network and communication is not performed via the second bearer for the predetermined period.

A third aspect of the present invention is summarized as a gateway apparatus, which serves as a second gateway apparatus included in a mobile communication system in which a mobile station is configured to communicate with a predetermined network via a first bearer that is a bearer in a radio access network and a second bearer that is a bearer in a core network, including: a transmission unit configured to transmit, to a first gateway apparatus, a bearer disconnection request for disconnecting the second bearer, when it is determined that the mobile station visits a first radio access network and communication is not performed via the second bearer set between the first gateway apparatus and the second gateway apparatus for a predetermined period, wherein when it is determined that the mobile station visits a second radio access network and communication is not performed via the second bearer for the predetermined period, the transmission unit is configured not to transmit, to the first gateway apparatus, the bearer disconnection request.

A fourth aspect of the present invention is summarized as a gateway apparatus, which serves as a second gateway apparatus included in a mobile communication system in which a mobile station is configured to communicate with a predetermined network via a first bearer that is a bearer in a radio access network and a second bearer that is a bearer in a core network, including: a transmission unit configured to transmit, to a first gateway apparatus, a bearer disconnection request for disconnecting the second bearer, when it is determined that the mobile station visits a first radio access network and communication is not performed via the second bearer set between the first gateway apparatus and the second gateway apparatus for a predetermined period, or when it is determined that a plurality of the second bearers have been set to the mobile station in a second radio access network and communication is not performed via the second bearer for the predetermined period, wherein when it is determined that only one second bearer has been set to the mobile station in the second radio access network and communication is not performed via the second bearer for the predetermined period, the transmission unit is configured not to transmit the bearer disconnection request.

A fifth aspect of the present invention is summarized as a server apparatus, which serves as a predetermined server apparatus included in a mobile communication system in which a mobile station is configured to communicate with a predetermined network via a first bearer that is a bearer in a radio access network and a second bearer that is a bearer in a core network, including: a determination unit configured to determine a type of a radio access network, which the mobile station visits, according to a bearer setup request or a bearer modification request which is received from a first gateway apparatus; and an instruction unit configured to instruct a second gateway apparatus to disconnect the second bearer, when it is determined that the mobile station visits a first radio access network and communication is not performed via the second bearer set between the first gateway apparatus and the second gateway apparatus for a predetermined period, wherein when it is determined that the mobile station visits a second radio access network and communication is not performed via the second bearer for the predetermined period, the instruction unit is configured not to instruct the second gateway apparatus to disconnect the second bearer

A sixth aspect of the present invention is summarized as a server apparatus, which serves as a predetermined server apparatus included in a mobile communication system in which a mobile station is configured to communicate with a predetermined network via a first bearer that is a bearer in a radio access network and a second bearer that is a bearer in a core network, including: a determination unit configured to determine a type of a radio access network, which the mobile station visits, according to a bearer setup request or a bearer modification request which is received from a first gateway apparatus; and an instruction unit configured to instruct a second gateway apparatus to disconnect the second bearer, when it is determined that the mobile station visits a first radio access network or when it is determined that a plurality of the second bearers have been set to the mobile station in a second radio access network, if communication is not performed via the second bearer set between the first gateway apparatus and the second gateway apparatus for a predetermined period, wherein when it is determined that only one second bearer has been set to the mobile station in the second radio access network and communication is not performed via the second bearer for the predetermined period, the instruction unit is configured not to instruct the second gateway apparatus to disconnect the second bearer.

### EFFECT OF THE INVENTION

As described above, according to the present invention, it is possible to provide a mobile communication method capable of preventing the waste of resources of the radio access network and the core network by determining whether to perform a preservation state releasing procedure according to the type of the radio access network, a gateway apparatus and a server apparatus.

### BRIEF DESCRIPTION OF THE DRAWINGS

[Fig. 1] Fig. 1 is a diagram showing the entire configuration of a mobile communication system according to first embodiment of the present invention.
[Fig. 2] Fig. 2 is a functional block diagram of a server apparatus PCRF according to the first embodiment of the present invention.
[Fig. 3] Fig. 3 is a functional block diagram of a gateway apparatus P-GW according to the first embodiment of the present invention.
[Fig. 4] Fig. 4 is a diagram explaining an operation of the mobile communication system according to first embodiment of the present invention.
[Fig. 5] Fig. 5 is a diagram explaining an operation of the mobile communication system according to first embodiment of the present invention.
[Fig. 6] Fig. 6 is a functional block diagram of a gateway apparatus P-GW according to a first modification of the present invention.
[Fig. 7] Fig. 7 is a diagram explaining an operation of the mobile communication system according to the first modification of the present invention.
[Fig. 8] Fig. 8 is a diagram explaining an operation of the mobile communication system according to the first modification of the present invention.

### BEST MODES FOR CARRYING OUT THE INVENTION

### (Configuration of mobile communication system according to first embodiment of the present invention)

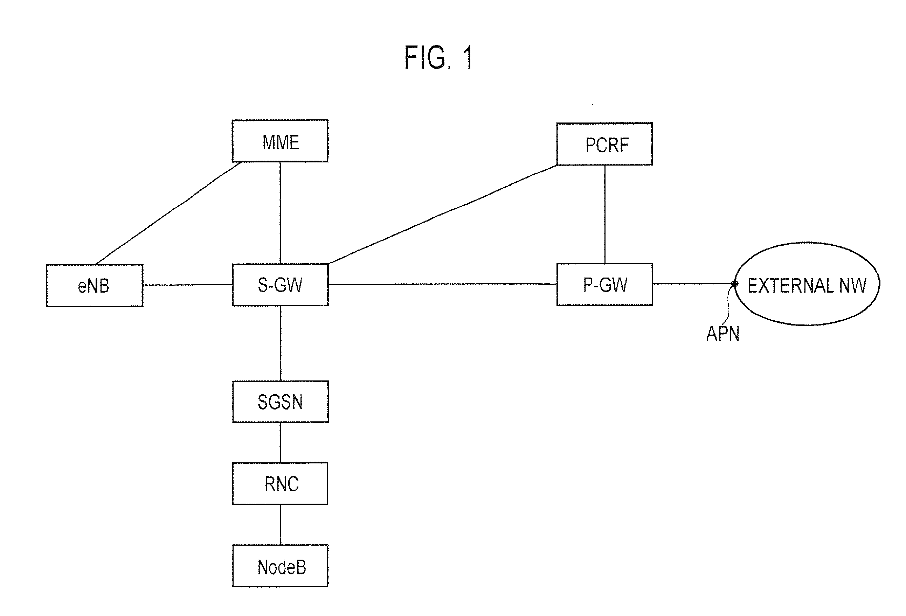

With reference to Fig. 1 to Fig. 3, the configuration of a mobile communication system according to a first embodiment of the present invention will be explained.

The mobile communication system according to the present embodiment includes a radio access network (a first radio access network) of the W-CDMA scheme and a radio access network (a second radio access network) of the LTE scheme.

Here, in the radio access network of the LTE scheme, it is necessary for a mobile station UE to hold at least one core network bearer in order to maintain an attach state.

Meanwhile, in the radio access network of the W-CDMA scheme, it is not necessary for a mobile station UE to hold the core network bearer in order to maintain the attach state.

Specifically, as illustrated in Fig. 1, the mobile communication system according to the present embodiment includes a radio base station NodeB, a radio network control station RNC, and a mobile switching center SGSN in the radio access network of the w-CDMA scheme, and includes a radio base station eNB and an mobile switching center MME in the radio access network of the LTE scheme.

Further, the mobile communication system according to the present embodiment includes a first gateway apparatus S-GW (Serving-Gateway), a second gateway apparatus P-GW (PDN-Gateway) and a predetermined server apparatus PCRF (Policy & Charging Rules Function) in a core network.

It is noted that in the mobile communication system according to the present embodiment, the second gateway apparatus P-GW is connected to a predetermined network (e.g., an external network) via an access point specified by an APN (Access Point Name).

Further, the mobile communication system according to the present embodiment is configured such that "PMIP (Proxy Mobile IP)" is used as a protocol in the core network.

Further, in the mobile communication system according to the present embodiment, the mobile station UE is configured to communicate with the predetermined network via a radio access network bearer (a first bearer) and a core network bearer (a second bearer).

Here, the radio access network bearer is set to the mobile station UE between the mobile station UE and the first gateway apparatus S-GW, and the core network bearer is set to the mobile station UE between the first gateway apparatus S-GW and the second gateway apparatus P-GW.

It is noted that in the mobile communication system according to the present embodiment, when communication is not performed via the radio access network bearer for a fixed period, a "Preservation control procedure" for disconnecting the radio access network bearer is applied.

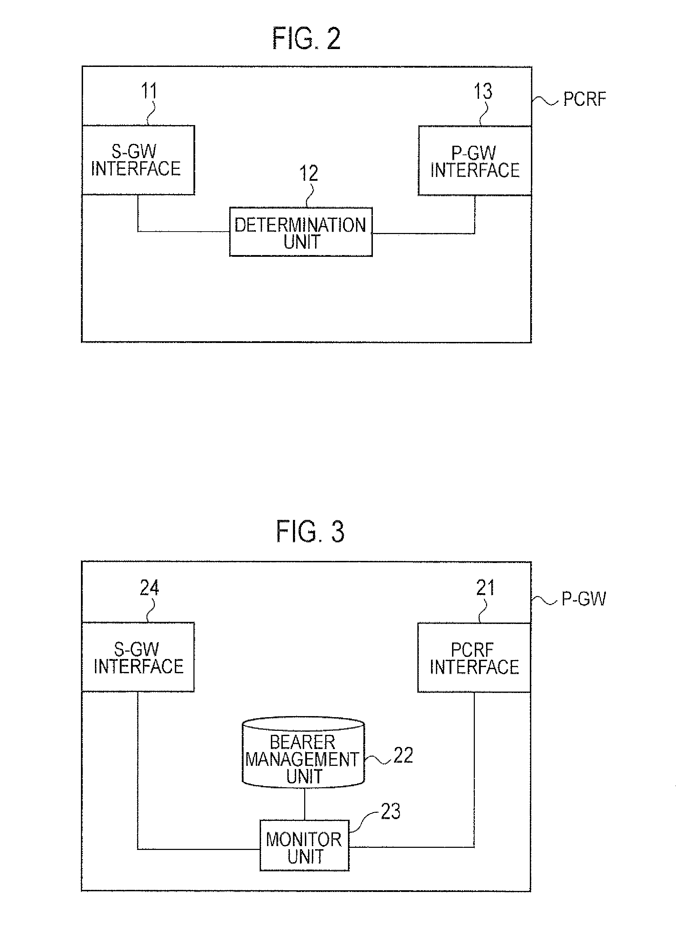

The predetermined server apparatus PCRF is a server apparatus for managing network policy, charging rules and the like, and includes an S-GW interface 11, a determination unit 12, and a P-GW interface 13 as illustrated in Fig. 2.

The S-GW interface 11 is configured to serve as an interface between the predetermined server apparatus PCRF and the first gateway apparatus S-GW.

For example, the S-GW interface 11 is configured to receive "Diameter_CC Request" transmitted by the first gateway apparatus S-GW.

The determination unit 12 is configured to determine the type of a radio access network, which the mobile station UE visits, according to an "RAT type" included in the "Diameter_CC Request" received from the first gateway apparatus S-GW.

Here, the "Diameter_CC Request" denotes a bearer setup request for requesting the setup of the core network bearer, or a bearer modification request for requesting to modify the configuration of the core network bearer. The "Diameter_CC Request" includes the "APN" for specifying a connection destination access point of the core network bearer, in addition to the above-mentioned "RAT type".

For example, the "RAT type" denotes information indicating whether a radio access network for which the radio access network bearer has been set is the radio access network of the W-CDMA scheme (or the mobile station visits the radio access network of the W-CDMA scheme) or the radio access network of the LTE scheme (or the mobile station visits the radio access network of the LTE scheme).

The P-GW interface 13 is configured to serve as an interface between the predetermined server apparatus PCRF and the second gateway apparatus P-GW.

For example, the P-GW interface 13 is configured to receive the "Diameter_CC Request" transmitted by the second gateway apparatus P-GW, and transmit "Diameter_CC Answer" or "Diameter_Re-Auth Request" to the second gateway apparatus P-GW.

Further, in the case in which it is determined that the mobile station UE visits the radio access network of the W-CDMA scheme, when communication is not performed via the core network bearer for a predetermined period, the P-GW interface 13 instructs the second gateway apparatus P-GW to disconnect the core network bearer.

In such a case, the P-GW interface 13 is configured to transmit the "Diameter CC Answer" or the "Diameter_Re-Auth Request", which includes "Preservation setting information (predetermined information)", to the second gateway apparatus P-GW.

Meanwhile, in the case in which it is determined that the mobile station UE visits the radio access network of the LTE scheme, when communication is not performed via the core network bearer for a predetermined period, the P-GW interface 13 does not allow the second gateway apparatus P-GW to disconnect the core network bearer.

In such a case, the P-GW interface 13 is configured to transmit the "Diameter_CC Answer" or the "Diameter Re-Auth Request", which includes "constant connection target call flag (predetermined information)", to the second gateway apparatus P-GW.

It is noted that in such a case, the P-GW interface 13 may be configured to transmit the "Diameter_CC Answer" or the "Diameter_Re-Auth Request", which includes a "timer value (= "0" or "∞")", to the second gateway apparatus P-GW.

In the above-mentioned example, the case in which only one core network bearer is set to the mobile station UE in the mobile communication system according to the present embodiment has been explained. However, in the mobile communication system according to the present embodiment, a plurality of core network bearers may be set to the mobile station UE.

In such a case, as well as the case in which it is determined that the mobile station UE visits the radio access network of the W-CDMA scheme, even in the case in which it is determined that a plurality of core network bearers have been set to the mobile station UE in the radio access network of the LTE scheme, when communication is not performed via the core network bearer for a predetermined period, the P-GW interface 13 allows the second gateway apparatus P-GW to disconnect the core network bearer.

Meanwhile, in the case in which only one core network bearer has been set to the mobile station UE in the radio access network of the LTE scheme, when communication is not performed via the core network bearer for a predetermined period, the P-GW interface 13 does not allow the second gateway apparatus P-GW to disconnect the core network bearer.

In such a case, the predetermined server apparatus PCRF manages the core network bearer set to each mobile station UE.

As illustrated in Fig. 3, the second gateway apparatus P-GW includes a PCRF interface 21, a bearer management unit 22, a monitor unit 23, and an S-GW interface 24.

The PCRF interface 21 is configured to serve as an interface between the second gateway apparatus P-GW and the predetermined server apparatus PCRF.

For example, the PCRF interface 21 is configured to receive "Diameter_CC Answer" or "Diameter_Re-Auth Request" transmitted by the predetermined server apparatus PCRF, and transmit "Diameter CC Request" to the predetermined server apparatus PCRF.

The bearer management unit 22 is configured to manage the core network bearer set to each mobile station UE.

The monitor unit 23 is configured to monitor the communication situation of the mobile station UE, which is performed via the core network bearer.

Specifically, only when it is determined that the mobile station UE visits the radio access network of the W-CDMA scheme or it is determined that a plurality of bearers have been set to the mobile station UE in the radio access network of the LTE scheme, the monitor unit 23 may be configured to monitor the communication situation of the mobile station UE.

For example, only when the "Diameter_CC Answer" or the "diameter Re-Auth Request", which includes "reservation setting information (predetermined information)", is received in the PCRF interface 21, the monitor unit 23 may be configured to monitor the communication situation of the mobile station UE. However, when the "Diameter_CC Answer" or the "Diameter_Re-Auth Request", which includes the "constant connection target call flag (predetermined information)" or the "timer value (= "0" or "∞")", is received in the PCRF interface 21, the monitor unit 23 may be configured not to monitor the communication situation of the mobile station UE.

Here, when detecting the fact that communication is not performed by the mobile station UE via the core network bearer for a predetermined period, the monitor unit 23 is configured to notify the S-GW interface 24 that the communication is not performed.

The S-GW interface 24 is configured to serve as an interface between the second gateway apparatus P-GW and the first gateway apparatus S-GW.

For example, the S-GW interface 24 is configured to receive "PMIP_PBU (Proxy Binding Update) " transmitted by the first gateway apparatus S-GW or transmit "PMIP_BRI (Binding Revocation Indication)" to the first gateway apparatus S-GW.

Here, the "PMIP_PBU" denotes a bearer setup request for requesting the setup of the core network bearer, and the "PMIP_BRI" denotes a bearer disconnection request for requesting the disconnecting of the core network bearer.

Specifically, the S-GW interface 24 is configured to transmit the "PMIP_BRI" to the first gateway apparatus S-GW in response to the notification from the above-mentioned monitor unit 23.

### (Operation of mobile communication system according to first embodiment of the present invention)

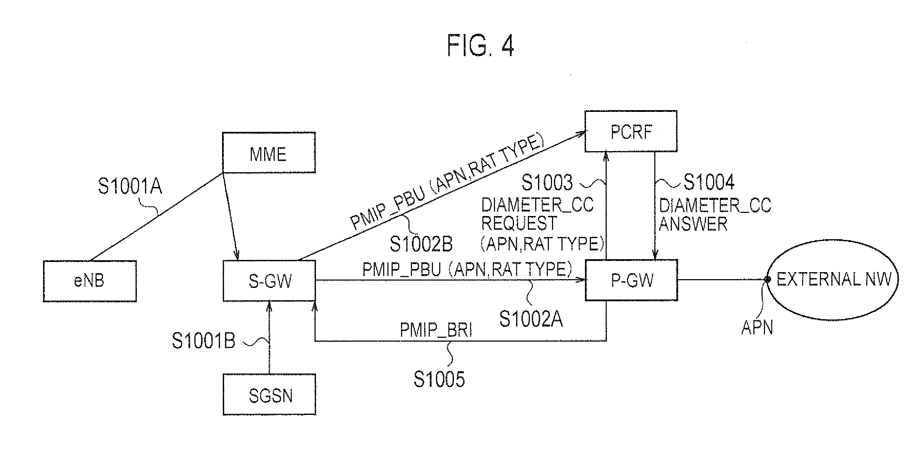

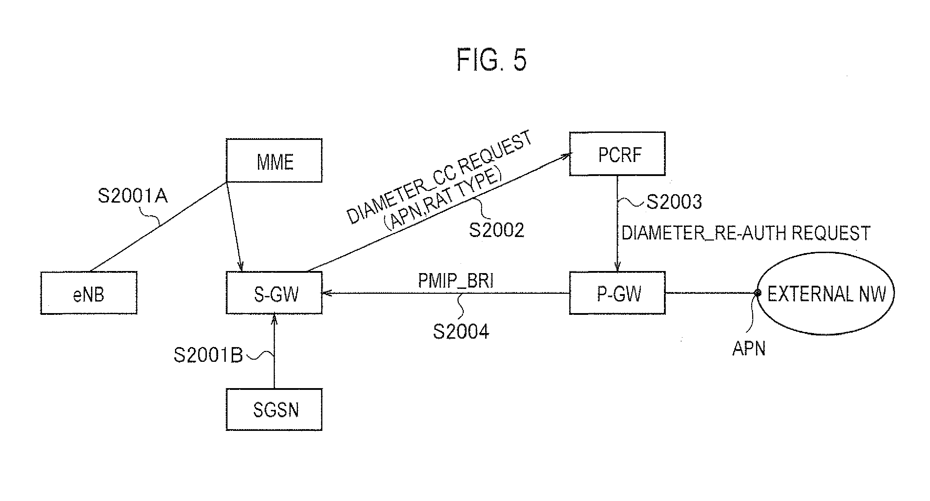

With reference to Fig. 4 and Fig. 5, the operation of the mobile communication system according to the present embodiment will be explained, below.

Firstly, with reference to Fig. 4, an operation of setting a second bearer in the mobile communication system according to the present embodiment will be explained.

As illustrated in Fig. 4, in step S1001A, the radio base station eNB transmits the "LTE Attach" signal, the "TAU (S-GW modification)" signal or the "Inter RAT HO (S-GW modification)" signal to the first gateway apparatus S-GW via the mobile switching center MME.

Here, the "LTE Attach" signal is transmitted when the mobile station UE performs an attach process with respect to the radio access network of the LTE scheme.

Further, the "TAU (S-GW modification)" signal denotes a location registration signal for notifying a modification in a TA (Tracking Area) which is a location registration area in the radio access network of the LTE scheme, and specifically denotes a location registration signal transmitted when the first gateway apparatus S-GW is switched.

Moreover, the "Inter RAT HO (S-GW modification) signal is transmitted at the time of a handover (the radio access network of the W-CDMA scheme to the radio access network of the LTE scheme) between different RATs (Radio Access Technologies), and specifically denotes a signal transmitted when the first gateway apparatus S-GW is switched.

Also, in step S1001B, the mobile switching center SGSN transmits a "Create Session Request" signal, an "RAU (S-GW modification)" signal or an "Inter RAT HO (S-GW modification)" signal to the first gateway apparatus S-GW.

Here, the "Create Session Request" signal is transmitted by the mobile station UE when a bear is set in the radio access network of the LTE scheme after the attach process is performed with respect to the radio access network of the W-CDMA scheme.

Further, the "RAU (S-GW modification)" signal denotes a location registration signal for notifying a modification in RA (Routing Area) which is a location registration area in the radio access network of the W-CDMA scheme, and in particular, denotes a location registration signal transmitted when the first gateway apparatus S-GW is switched.

Moreover, the "Inter RAT HO (S-GW modification)" signal is transmitted at the time of a handover ( the radio access network of the LTE scheme to the radio access network of the W-CDMA scheme) between the different RATs, and in particular, denotes a signal transmitted when the first gateway apparatus S-GW is switched.

Then, the first gateway apparatus S-GW transmits the "PMIP_PBU" including the "APN" and the "RAT type" to the second gateway apparatus P-GW in step S1002A, and transmits the "Diameter_CC Request" including the "APN" and the "RAT type" to the predetermined server apparatus PCRF in step S1002B.

Here, when the "LTE Attach" signal, the "TAU (S-GW modification)" signal or the "Inter RAT HO (S-GW modification)" signal is received, the first gateway apparatus S-GW transmits the "PMIP_PBU" in which the "radio access network of the LTE scheme" has been set as the "RAT type".

Meanwhile, when the "Create Session Request" signal, the "RAU (S-GW modification)" signal or the "Inter RAT HO (S-GW modification)" signal is received, the first gateway apparatus S-GW transmits the "PMIP PBU" in which the "radio access network of the W-CDMA scheme" has been set as the "RAT type".

In step S1003, the second gateway apparatus P-GW transmits the "Diameter_CC Request" including the "APN" and the "RAT type" to the predetermined server apparatus PCRF.

In step S1004, the predetermined server apparatus PCRF transmits the "Diameter_CC Answer" to the second gateway apparatus P-GW.

Here, when the "radio access network of the LTE scheme" has been set as the "RAT type" in the received "Diameter CC Request", the predetermined server apparatus PCRF transmits the "Diameter_CC Answer" including the "constant connection target call flag" or the "timer value (= "0" or "∞")".

Also, when the "radio access network of the LTE scheme" has been set as the "RAT type" in the received "Diameter CC Request" and no other core network bearers have been set to the mobile station LIE in the radio access network of the LTE scheme, the predetermined server apparatus PCRF transmits the "Diameter_CC Answer" including the "constant connection target call flag" or the "timer value (= "0" or "∞")".

Meanwhile, when the "radio access network of the W-CDMA scheme" has been set as the "RAT type" in the received "Diameter_CC Request", the predetermined server apparatus PCRF transmits the "Diameter_CC Answer" including the "Preservation setting information".

The second gateway apparatus P-GW sets a core network bearer for the mobile station UE between the first gateway apparatus S-GW and the second gateway apparatus P-GW in response to the "Diameter_CC Answer".

Then, when the "Preservation setting information" is included in the "Diameter_CC Answer", the second gateway apparatus P-GW starts to monitor the communication situation of the mobile station UE, which is performed via the core network bearer.

Meanwhile, when the "constant connection target call flag" or the "timer value (= "0" or "∞") " is included in the "Diameter_CC Answer", the second gateway apparatus P-GW does not monitor the communication situation of the mobile station UE, which is performed via the core network bearer.

When detecting the fact that communication is not performed by the mobile station UE via the core network bearer for a predetermined period, the second gateway apparatus P-GW disconnects the core network bearer by transmitting the "PMIP BRI" to the first gateway apparatus S-GW in step S1005.

It is noted that, instead of the predetermined server apparatus PCRF, the second gateway apparatus P-GW may be configured to determine whether the core network bearer is to be disconnected.

Secondly, with reference to Fig. 5, an operation for modifying the configuration of the second bearer in the mobile communication system according to the present embodiment will be explained.

As illustrated in Fig. 5, in step S2001A, the radio base station eNB transmits the "TAU (no S-GW modification)" signal or the "Inter RAT HO (no S-GW modification)" signal to the first gateway apparatus S-GW via the mobile switching center MME.

Here, the "TAU (no S-GW modification)" signal denotes a location registration signal for notifying a modification in the TA, and specifically denotes a location registration signal transmitted when the first gateway apparatus S-GW is not switched.

Moreover, the "Inter RAT HO (no S-GW modification)" signal is transmitted at the time of a handover (the radio access network of the W-CDMA scheme to the radio access network of the LTE scheme) between the different RATs, and specifically denotes a signal transmitted when the first gateway apparatus S-GW is not switched.

Also, in step S2001B, the mobile switching center SGSN transmits the "RAU (no S-GW modification)" signal or the "Inter RAT HO (no S-GW modification)" signal to the first gateway apparatus S-GW.

Here, the "RAU (no S-GW modification)" signal denotes a location registration signal for notifying a modification in the RA, and specifically denotes a location registration signal transmitted when the first gateway apparatus S-GW is not switched.

Moreover, the "Inter RAT HO (S-GW modification)" signal is transmitted at the time of a handover (the radio access network of the LTE scheme to the radio access network of the W-CDMA scheme) between the different RATs, and specifically denotes a signal transmitted when the first gateway apparatus S-GW is not switched.

Then, the first gateway apparatus S-GW transmits the "Diameter_CC Request" including the "APN" and the "RAT type" to the predetermined server apparatus PCRF in step S2002.

Here, when the "TAU (no S-GW modification)" signal or the "Inter RAT HO (no S-GW modification)" signal is received, the first gateway apparatus S-GW transmits the "Diameter_CC Request" in which the "radio access network of the LTE scheme" has been set as the "RAT type".

Meanwhile, when the "RAU (no S-GW modification)" signal, or the "Inter RAT HO (no S-GW modification)" signal is received, the first gateway apparatus S-GW transmits the "Diameter CC Request" in which the "radio access network of the W-CDMA scheme" has been set as the "RAT type".

In step S2003, the predetermined server apparatus PCRF transmits the "Diameter Re-Auth Request" to the second gateway apparatus P-GW.

Here, when the "radio access network of the LTE scheme" has been set as the "RAT type" in the received "Diameter_CC Request", the predetermined server apparatus PCRF transmits the "Diameter Re-Auth Request" including the "constant connection target call flag" or the "timer value (= "0" or "∞")".

Also, when the "radio access network of the LTE scheme" has been set as the "RAT type" in the received "Diameter CC Request" and no other core network bearers have been set to the mobile station UE in the radio access network of the LTE scheme, the predetermined server apparatus PCRF transmits the "Diameter_Re-Auth Request" including the "constant connection target call flag" or the "timer value (= "0" or "∞)".

Meanwhile, when the "radio access network of the W-CDMA scheme" has been set as the "RAT type" in the received "Diameter CC Request", the predetermined server apparatus PCRF transmits the "Diameter Re-Auth Request" including the "Preservation setting information".

The second gateway apparatus P-GW modifies the configuration (parameter) of the core network bearer for the mobile station UE set between the first gateway apparatus S-GW and the second gateway apparatus P-GW in response to the "Diameter Re-Auth Request".

Then, when the "Preservation setting information" is included in the "Diameter Re-Auth Request", the second gateway apparatus P-GW starts to monitor the communication situation of the mobile station UE, which is performed via the core network bearer.

Meanwhile, when the "constant connection target call flag" or the "timer value (= "0" or "∞")" is included in the "Diameter_Re-Auth Request", the second gateway apparatus P-GW does not monitor the communication situation of the mobile station UE, which is performed via the core network bearer.

When detecting the fact that communication is not performed by the mobile station UE via the core network bearer for a predetermined period, the second gateway apparatus P-GW disconnects the core network bearer by transmitting the "PMIP_BRI" to the first gateway apparatus S-GW in step S2004.

### (Operation and Effect of mobile communication system according to first embodiment of the present invention)

In accordance with the mobile communication system according to the first embodiment of the present invention, when it is determined that one core network bearer has been set to the mobile station UE in the radio access network of the LTE scheme, even if communication of the mobile station UE is not performed via the core network bearer for a predetermined period, since it is configured not to disconnect the core network bearer, it is possible to maintain the state of the mobile station UE as an attach state in the radio access network of the LTE scheme.

Meanwhile, in accordance with the mobile communication system according to the first embodiment of the present invention, when it is determined that the radio access network bearer has been set to the mobile station UE in the radio access network of the W-CDMA scheme or a plurality of core network bearers have been set to the mobile station UE in the radio access network of the LTE scheme, even if communication of the mobile station UE is not performed via the core network bearer for a predetermined period, since it is configured to disconnect the core network bearer, it is possible to effectively utilize a resource of the core network.

### (First Modification)

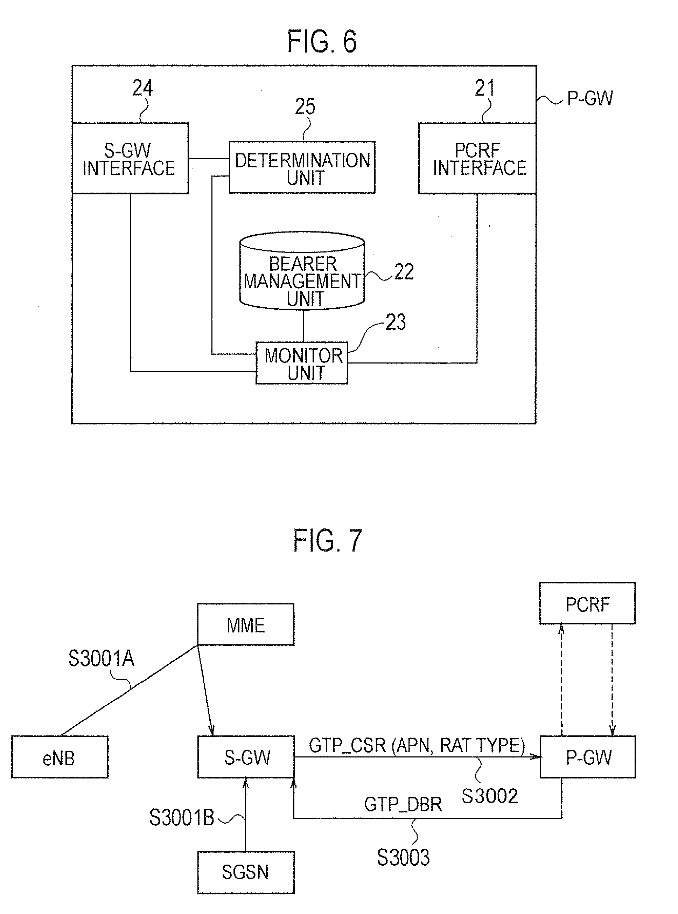

With reference to Fig. 6 to Fig. 8, the mobile communication system according to the first modification of the present invention will be explained. Hereinafter, the mobile communication system according to the first modification of the present invention will be explained while focusing on the difference relative to the mobile communication system according to the above-mentioned first embodiment.

It is noted that in the mobile communication system according to the present first modification, GTP (GPRS Tunneling Protocol) is configured to be used as a protocol in the core network.

As illustrated in Fig. 6, the second gateway apparatus P-GW includes a determination unit 25, in addition to the configuration of the second gateway apparatus P-GW according to the above-mentioned first embodiment.

It is noted that, in the mobile communication system according to the present first modification, since the predetermined server apparatus PCRF may be not provided, when the predetermined server apparatus PCRF is not provided, the second gateway apparatus P-GW may not include the PCRF interface 21.

The determination unit 25 is configured to determine the type of a radio access network, which the mobile station UE visits, according to the "RAT type" included in "GTP_CSR (Create Session Request)" or "GTP_MBR (Modify Bearer Request)" which is received from the first gateway apparatus S-GW.

Here, the "GTP_CSR" denotes a bearer setup request for requesting the setup of the core network bearer, and the "GTP_MBR" denotes a bearer modification request for requesting to modify the configuration of the core network bearer.

The "GTP CSR" and the "GTP_MBR" include the "APN" for specifying a connection destination access point of the core network bearer, in addition to the above-mentioned "RAT type".

When the "GTP_CSR" or the "GTP_MBR", in which the "radio access network of the W-CDMA scheme" has been set as the "RAT type", is received in the S-GW interface 24, the monitor unit 23 may be configured to monitor the communication situation of the mobile station UE.

Further, when the "GTP_CSR" or the "GTP_MBR", in which the "radio access network of the LET scheme" has been set as the "RAT type", is received in the S-GW interface 24 and a plurality of core network bearers for the mobile station UE have been set in the radio access network of the LET scheme, the monitor unit 23 may be configured to monitor the communication situation of the mobile station UE.

Meanwhile, when the "GTP CSR" or the "GTP MBR", in which the "radio access network of the LET scheme" has been set as the "RAT type", is received in the S-GW interface 24 and only one core network bearer for the mobile station UE has been set in the "radio access network of the LET scheme", the monitor unit 23 may be configured not to monitor the communication situation of the mobile station UE.

The S-GW interface 24 is configured to receive the "GTP_CSR" or the "GTP_MBR" transmitted by the first gateway apparatus S-GW, or transmit "GTP DBR (Delete Bearer Request)" to the first gateway apparatus S-GW.

Here, the "GTP DBR" denotes a bearer disconnection request for requesting the disconnecting of the core network bearer.

Specifically, the S-GW interface 24 is configured to transmit the "GTP DBR" to the first gateway apparatus S-GW in response to the notification from the above-mentioned monitor unit 23.

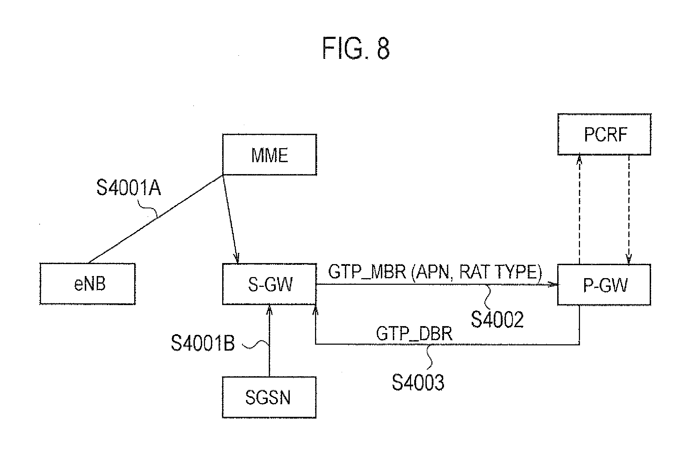

Hereinafter, with reference to Fig. 7 and Fig. 8, the operation of the mobile communication system according to the second modification will be explained.

Firstly, with reference to Fig. 7, an operation of setting the core network bearer in the mobile communication system according to the present embodiment will be explained.

As illustrated in Fig. 7, in step S3001A, the radio base station eNB transmits the "LTE Attach" signal, the "TAU (S-GW modification)" signal or the "Inter RAT HO (S-GW modification)" signal to the first gateway apparatus S-GWvia the mobile switching center MME.

Also, in step S3001B, the radio base station eNB transmits the "Create Session Request" signal, the "RAU (S-GW modification)" signal or the "Inter RAT HO (S-GW modification) " signal to the first gateway apparatus S-GW via the mobile switching center SGSN.

Then, the first gateway apparatus S-GW transmits the "GTP_CSR" including the "APN" and the "RAT type" to the second gateway apparatus P-GW in step S3002.

Here, when the "LTE Attach" signal, the "TAU (S-GW modification)" signal or the "Inter RAT HO (S-GW modification)" signal is received, the first gateway apparatus S-GW transmits the "GTP_CSR" in which the "radio access network of the LTE scheme" has been set as the "RAT type".

Meanwhile, when the "Create Session Request" signal, the "RAU (S-GW modification)" signal or the "Inter RAT HO (S-GW modification)" signal is received, the first gateway apparatus S-GW transmits the "GTP CSR" in which the "radio access network of the W-CDMA scheme" has been set as the "RAT type".

Here, the second gateway apparatus P-GW sets the core network bearer for the mobile station UE between the first gateway apparatus S-GW and the second gateway apparatus P-GW in response to the "GTP_CSR".

Then, when the "radio access network of the W-CDMA scheme" has been set as the "RAT type" in the received "GTP_CSR", the second gateway apparatus P-GW starts to monitor the communication situation of the mobile station UE, which is performed via the core network bearer.

Also, when the "radio access network of the LTE scheme" has been set as the "RAT type" in the received "GTP_CSR" and no other core network bearers have been set to the mobile station UE in the radio access network of the LTE scheme, the second gateway apparatus P-GW starts to monitor the communication situation of the mobile station UE, which is performed via the core network bearer.

Meanwhile, when the "radio access network of the LTE scheme" has been set as the "RAT type" in the received "GTP_CSR" and a plurality of core network bearers have been set to the mobile station UE in the radio access network of the LTE scheme, the second gateway apparatus P-GW does not monitor the communication situation of the mobile station UE, which is performed via the core network bearer.

When detecting the fact that communication is not performed by the mobile station UE via the core network bearer for a predetermined period, the second gateway apparatus P-GW disconnects the core network bearer by transmitting the "GTP_DBR" to the first gateway apparatus S-GW in step S3003.

Secondly, with reference to Fig. 8, an operation for modifying the configuration of the second bearer in the mobile communication system according to the present embodiment will be explained.

As illustrated in Fig. 8, in step S4001A, the radio base station eNB transmits the "TAU (no S-GW modification)" signal or the "Inter RAT HO (no S-GW modification)" signal to the first gateway apparatus S-GW via the mobile switching center MMB.

Also, in step S4001B, the mobile switching center SGSN transmits the "RAU (no S-GW modification)" signal or the "Inter RAT HO (no S-GW modification)" signal to the first gateway apparatus S-GW.

Then, the first gateway apparatus S-GW transmits the "GTP_MBR" including the "APN" and the "RAT type" to the second gateway apparatus P-GW in step S4002.

Here, when the "TAU (no S-GW modification)" signal or the "Inter RAT HO (no S-GW modification) " signal is received, the first gateway apparatus S-GW transmits the "GTP_MBR" in which the "radio access network of the LTE scheme" has been set as the "RAT type".

Meanwhile, when the "RAU (no S-GW modification)" signal or the "Inter RAT HO (no S-GW modification)" signal is received, the first gateway apparatus S-GW transmits the "GTP MBR" in which the "radio access network of the W-CDMA scheme" has been set as the "RAT type".

Here, the second gateway apparatus P-GW sets the configuration (parameter) of the core network bearer for the mobile station UE set between the first gateway apparatus S-GW and the second gateway apparatus P-GW in response to the "GTP_MBR".

Then, when the "radio access network of the W-CDMA scheme" has been set as the "RAT type" in the received "GTP_MBR", the second gateway apparatus P-GW starts to monitor the communication situation of the mobile station UE, which is performed via the core network bearer.

Also, when the "radio access network of the LTE scheme" has been set as the "RAT type" in the received "GTP_MBR" and no other core network bearers have been set to the mobile station UE in the radio access network of the LTE scheme, the second gateway apparatus P-GW starts to monitor the communication situation of the mobile station UE, which is performed via the core network bearer.

Meanwhile, when the "radio access network of the LTE scheme" has been set as the "RAT type" in the received "GTP_MBR" and a plurality of core network bearers have been set to the mobile station UE in the radio access network of the LTE scheme, the second gateway apparatus P-GW does not monitor the communication situation of the mobile station UE, which is performed via the core network bearer.

When detecting the fact that communication is not performed by the mobile station UE via the core network bearer for a predetermined period, the second gateway apparatus P-GW disconnects the core network bearer by transmitting the "GTP_DBR" to the first gateway apparatus S-GW in step S4003.

### (Third Modification)

In the above-mentioned mobile communication system, the first gateway apparatus S-GW may be configured to receive the "Create Session Request", which includes predetermined information regarding the presence or absence of a bearer setup request in the state in which a core network bearer has not been set in the radio access network of the LTE scheme, from the mobile switching center MME, and transmit "PMIP_PBU" or "GTP_CSR" including the predetermined information to the second gateway apparatus P-GW.

In such a case, the second gateway apparatus P-GW may determine whether or not a core network bearer set by the "PMIP PBU" or the "GTP_CSR" is subject to a "Preservation state releasing procedure" based on the predetermined information.

Further, the "PMIP_PBU" can be transmitted at an arbitrary timing in order to modify the "RAT type" corresponding to each core network bearer.

In this regard, the second gateway apparatus P-GW may determine whether or not the core network bearer is subject to the "Preservation state releasing procedure" based on the "RAT type" included in the "PMIP_PBU".

The aspects of the present embodiment as described above may be expressed as follows.

A first aspect of the present embodiment is summarized as a mobile communication method, in which a mobile station UE communicates with a predetermined network via a radio access network bearer and a core network bearer, including the steps of: (A) disconnecting the core network bearer when it is determined that the mobile station UE visits a radio access network (a first radio access network) of the W-CDMA scheme and communication is not performed via the core network bearer for a predetermined period; and (B) holding the core network bearer when it is determined that the mobile station UE visits a radio access network (a second radio access network) of the LTE scheme and communication is not performed via the core network bearer for the predetermined period.

A second aspect of the present embodiment is summarized as a mobile communication method, in which a mobile station UE communicates with a predetermined network via a radio access network bearer and a core network bearer, including the steps of: (A) disconnecting the core network bearer when it is determined that the mobile station UE visits a radio access network of the W-CDMA scheme and communication is not performed via the core network bearer for a predetermined period, or when it is determined that a plurality of core network bearers have been set to the mobile station UE in a radio access network of the LTE scheme and communication is not performed via the core network bearer for a predetermined period; and (B) holding the core network bearer when it is determined that only one core network bearer has been set to the mobile station UE in the radio access network of the LTE scheme, even if it is determined that communication is not performed via the core network bearer for the predetermined period.

In the first aspect or the second aspect of the present embodiment, the core network bearer has been set between a first gateway apparatus S-GW and a second gateway apparatus P-GW, and in the step (A), when it is determined that communication is not performed via the core network bearer for the predetermined period, the second gateway apparatus P-GW may transmit "PMIP_BRI (a bearer disconnection request)" or "GTP_DBR (a bearer disconnection request)" to the first gateway apparatus S-GW.

In the first aspect or the second aspect of the present embodiment, the mobile communication method may further include: a step of determining, at the second gateway apparatus P-GW, the type (RAT type) of a radio access network, which the mobile station UE visits, according to "PMIP_PBU (a bearer setup request)", "GTP_CSR (a bearer setup request)", or "GTP_MBR (a bearer modification request)" which is received from the first gateway apparatus S-GW.

In the first aspect or the second aspect of the present embodiment, the mobile communication method may further include a step of determining, at the second gateway apparatus P-GW, the type of the radio access network, which the mobile station UE visits, according to predetermined information (e.g., constant connection target call flag, a timer value (= "0" or "∞")), which is received from a predetermined server apparatus PCRF.

A third aspect of the present embodiment is summarized as a gateway apparatus, which serves as a second gateway apparatus P-GW included in a mobile communication system in which a mobile station UE is configured to communicate with a predetermined network via a radio access network bearer and a core network bearer, including: the S-GW interface 24 configured to transmit "PMIP_BRI (a bearer disconnection request)" or "GTP_DBR (a bearer disconnection request)" for disconnecting the core network bearer to a first gateway apparatus S-GW when it is determined that the mobile station UE visits a radio access network of the W-CDMA scheme and communication is not performed via the core network bearer for a predetermined period, wherein when it is determined that the mobile station UE visits a radio access network of the LTE scheme and communication is not performed via the core network bearer for a predetermined period, the S-GW interface 24 is configured to not transmit the "PMIP BRT (the bearer disconnection request)" or the "GTP_DBR (the bearer disconnection request) " to the first gateway apparatus S-GW.

A third aspect of the present embodiment is summarized as a gateway apparatus, which serves as a second gateway apparatus P-GW included in a mobile communication system in which a mobile station UE is configured to communicate with a predetermined network via a radio access network bearer and a core network bearer, including: an S-GW interface 24 configured to transmit "PMIP_BRI (a bearer disconnection request)" or "GTP_DBR (a bearer disconnection request) " for disconnecting the core network bearer to a first gateway apparatus S-GW when it is determined that the mobile station UE visits a radio access network of the W-CDMA scheme and communication is not performed via the core network bearer for a predetermined period, or when it is determined that a plurality of core network bearers have been set to the mobile station UE in a radio access network of the LTE scheme and communication is not performed via the core network bearer set between the first gateway apparatus S-GW and the second gateway apparatus P-GW for a predetermined period, wherein when it is determined that only one core network bearer has been set to the mobile station UE in the second radio access network of the LTE scheme and communication is not performed via the core network bearer for the predetermined period, the S-GW interface 24 is configured to not transmit the "PMIP_BRI (the bearer disconnection request) " or the "GTP_DBR (the bearer disconnection request)" to the first gateway apparatus S-GW.

In the third aspect or the fourth aspect of the present embodiment, the gateway apparatus may further include a determination unit 25 configured to determine the type of a radio access network, which the mobile station UE visits, according to "PMIP_PBU (a bearer setup request)", "GTP_CSR (a bearer setup request)", or "GTP_MBR (a bearer modification request)" which is received from the first gateway apparatus S-GW.

In the third aspect or the fourth aspect of the present embodiment, the gateway apparatus may further include a determination unit 25 configured to determine the type of a radio access network, which the mobile station UE visits, according to predetermined information (e.g., constant connection target call flag, a timer value (= "0" or "∞")), which is received from a predetermined server apparatus PCRF.

A fifth aspect of the present embodiment is summarized as a server apparatus, which serves as a predetermined server apparatus PCRF included in a mobile communication system in which a mobile station UE is configured to communicate with a predetermined network via a radio access network bearer and a core network bearer, including: a determination unit 12 configured to determine the type of a radio access network, which the mobile station UE visits, according to "PMIP_PBU (a bearer setup request)", or a "Diameter_CC_Request (a bearer modification request)" which is received from a first gateway apparatus S-GW, and a P-GW interface 13 configured to instruct a second gateway apparatus P-GW to disconnect the core network bearer when it is determined that the mobile station UE visits a radio access network of the W-CDMA scheme, if communication is not performed via a core network bearer set between the first gateway apparatus S-GW and the second gateway apparatus P-GW for a predetermined period, wherein when it is determined that the mobile station UE visits a radio access network of the LTE scheme, if communication is not performed via the core network bearer for the predetermined period, the P-GW interface 13 is configured not to instruct the second gateway apparatus P-GW to disconnect the core network bearer.

A sixth aspect of the present embodiment is summarized as a server apparatus, which serves as a predetermined server apparatus PCRF included in a mobile communication system in which a mobile station UE is configured to communicate with a predetermined network via a radio access network bearer and a core network bearer, including: a determination unit 12 configured to determine the type of a radio access network, which the mobile station UE visits, according to "PMIP_PBU (a bearer setup request)", or a "Diameter_CC_Request (a bearer modification request)" which is received from a first gateway apparatus S-GW, and a P-GW interface 13 configured to instruct a second gateway apparatus P-GW to disconnect the core network bearer when it is determined that the mobile station UE visits a radio access network of the W-CDMA scheme or when it is determined that a plurality of core network bearers have been set to the mobile station UE in a radio access network of the LTE scheme, if communication is not performed via a core network bearer set between the first gateway apparatus S-GW and the second gateway apparatus P-GW for a predetermined period, wherein when it is determined that only one core network bearer has been set to the mobile station UE in the radio access network of the LTE scheme, if communication is not performed via the core network bearer for the predetermined period, the P-GW interface 13 is configured not to instruct the second gateway apparatus P-GW to disconnect the core network bearer.

The operation of the above-described radio base station eNB, the mobile switching center MME/SGSN, the first gateway apparatus S-GW, the second gateway apparatus P-GW and the predetermined server apparatus PCRF may be implemented by a hardware, may also be implemented by a software module executed by a processor, and may further be implemented by the combination of the both.

The software module may be arranged in a storing medium of an arbitrary format such as RAM(Random Access Memory), a flash memory, ROM(Read Only Memory), EPROM(Erasable Programmable ROM), EEPROM (Electronically Erasable and Programmable ROM), a register, a hard disk, a removable disk, and CD-ROM.

Such a storing medium is connected to the processor so that the processor can write and read information into and from the storing medium. Such a storing medium may also be accumulated in the processor. Such a storing medium and processor may be arranged in ASIC. Such ASIC may be arranged in the radio base station eNB, the mobile switching center MME/SGSN, the first gateway apparatus S-GW, the second gateway apparatus P-GW and the predetermined server apparatus PCRF. As a discrete component, such a storing medium and processor may be arranged in the radio base station eNB, the mobile switching center MME/SGSN, the first gateway apparatus S-GW, the second gateway apparatus P-GW and the predetermined server apparatus PCRF.

Thus, the present invention has been explained in detail by using the above-described embodiments; however, it is obvious that for persons skilled in the art, the present invention is not limited to the embodiments explained herein. The present invention can be implemented as a corrected, modified mode without departing from the gist and the scope of the present invention defined by the claims. Therefore, the description of the specification is intended for explaining the example only and does not impose any limited meaning to the present invention.

## Claims

1. A mobile communication method, in which a mobile station communicates with a predetermined network via a first bearer that is a bearer in a radio access network and a second bearer that is a bearer in a core network, comprising the steps of:
(A) disconnecting the second bearer when it is determined that the mobile station visits a first radio access network and communication is not performed via the second bearer for a predetermined period; and
(B) holding the second bearer when it is determined that the mobile station visits a second radio access network and communication is not performed via the second bearer for the predetermined period.

2. A mobile communication method, in which a mobile station communicates with a predetermined network via a first bearer that is a bearer in a radio access network and a second bearer that is a bearer in a core network, comprising the steps of:
(A) disconnecting the second bearer when it is determined that the mobile station visits a first radio access network and communication is not performed via the second bearer for a predetermined period, or when it is determined that a plurality of the second bearers have been set to the mobile station in a second radio access network and communication is not performed via the second bearer for the predetermined period; and
(B) holding the second bearer when it is determined that only one second bearer has been set to the mobile station in the second radio access network and communication is not performed via the second bearer for the predetermined period.

3. The mobile communication method according to claim 1 or 2 wherein
the second bearer has been set between a first gateway apparatus and a second gateway apparatus; and
in the step (A), when it is determined that communication is not performed via the second bearer for the predetermined period, the second gateway apparatus transmits a bearer disconnection request to the first gateway apparatus.

4. The mobile communication method according to claim 3, further comprising:
a step of determining, at the second gateway apparatus, a type of a radio access network, which the mobile station visits, according to a bearer setup request or a bearer modification request which is received from the first gateway apparatus.

5. The mobile communication method according to claim 3, further comprising:
a step of determining, at the second gateway apparatus, a type of a radio access network, which the mobile station visits, according to predetermined information which is received from a predetermined server apparatus.

6. A gateway apparatus, which serves as a second gateway apparatus included in a mobile communication system in which a mobile station is configured to communicate with a predetermined network via a first bearer that is a bearer in a radio access network and a second bearer that is a bearer in a core network, comprising:
a transmission unit configured to transmit, to a first gateway apparatus, a bearer disconnection request for disconnecting the second bearer, when it is determined that the mobile station visits a first radio access network and communication is not performed via the second bearer set between the first gateway apparatus and the second gateway apparatus for a predetermined period, wherein
when it is determined that the mobile station visits a second radio access network and communication is not performed via the second bearer for the predetermined period, the transmission unit is configured not to transmit, to the first gateway apparatus, the bearer disconnection request.

7. A gateway apparatus, which serves as a second gateway apparatus included in a mobile communication system in which a mobile station is configured to communicate with a predetermined network via a first bearer that is a bearer in a radio access network and a second bearer that is a bearer in a core network, comprising:
a transmission unit configured to transmit, to a first gateway apparatus, a bearer disconnection request for disconnecting the second bearer, when it is determined that the mobile station visits a first radio access network and communication is not performed via the second bearer set between the first gateway apparatus and the second gateway apparatus for a predetermined period, or when it is determined that a plurality of the second bearers have been set to the mobile station in a second radio access network and communication is not performed via the second bearer for the predetermined period, wherein
when it is determined that only one second bearer has been set to the mobile station in the second radio access network and communication is not performed via the second bearer for the predetermined period, the transmission unit is configured not to transmit the bearer disconnection request.

8. The gateway apparatus according to claim 6 or 7, further comprising:
a determination unit configured to determine a type of a radio access network, which the mobile station visits, according to a bearer setup request or a bearer modification request which is received from the first gateway apparatus.

9. The gateway apparatus according to claim 6 or 7, further comprising:
a determination unit configured to determine a type of a radio access network, which the mobile station visits, according to predetermined information which is received from a predetermined server apparatus.

10. A server apparatus, which serves as a predetermined server apparatus included in a mobile communication system in which a mobile station is configured to communicate with a predetermined network via a first bearer that is a bearer in a radio access network and a second bearer that is a bearer in a core network, comprising:
a determination unit configured to determine a type of a radio access network, which the mobile station visits, according to a bearer setup request or a bearer modification request which is received from a first gateway apparatus; and
an instruction unit configured to instruct a second gateway apparatus to disconnect the second bearer, when it is determined that the mobile station visits a first radio access network and communication is not performed via the second bearer set between the first gateway apparatus and the second gateway apparatus for a predetermined period, wherein
when it is determined that the mobile station visits a second radio access network and communication is not performed via the second bearer for the predetermined period, the instruction unit is configured not to instruct the second gateway apparatus to disconnect the second bearer.

11. A server apparatus, which serves as a predetermined server apparatus included in a mobile communication system in which a mobile station is configured to communicate with a predetermined network via a first bearer that is a bearer in a radio access network and a second bearer that is a bearer in a core network, comprising:
a determination unit configured to determine a type of a radio access network, which the mobile station visits, according to a bearer setup request or a bearer modification request which is received from a first gateway apparatus; and
an instruction unit configured to instruct a second gateway apparatus to disconnect the second bearer, when it is determined that the mobile station visits a first radio access network or when it is determined that a plurality of the second bearers have been set to the mobile station in a second radio access network, if communication is not performed via the second bearer set between the first gateway apparatus and the second gateway apparatus for a predetermined period, wherein
when it is determined that only one second bearer has been set to the mobile station in the second radio access network and communication is not performed via the second bearer for the predetermined period, the instruction unit is configured not to instruct the second gateway apparatus to disconnect the second bearer.
